# FASCICULE DE BREVET EUROPEEN

(11) **EP 1 484 220 B1**
(45) Date de publication et mention de la délivrance du brevet: **01.02.2006**
(21) Numéro de dépôt: 04291371.5
(22) Date de dépôt: 02.06.2004
(51) Int. Cl.: B60R 13/01

(54) **Element pliable de protection du sol d'un coffre de vehicule automobile**
Elastisches Element zum Schutz für den Kofferaum eines Fahrzeugs
Elastic element for protecting a car trunk floor

(30) Priorité: 04.06.2003 FR 0306742
(43) Date de publication de la demande: 08.12.2004
(73) Titulaire: Centre d'Etude et de Recherche pour l'Automobile ( CERA), 51100 Reims (FR)
(72) Inventeur: Brillon, Eric, 51140 Chalons sur Vesle (FR)
(74) Mandataire: Geismar, Thierry

(56) Documents cités:
- DE-A- 2 163 725
- DE-A- 4 212 502
- DE-U- 29 710 777
- US-A- 5 083 831
- US-A- 5 213 147

## Description

L'invention concerne un élément pliable de protection de sol d'un coffre de véhicule automobile selon le préambule de la revendication 1, voir DE 2 163 725 A.

Il est connu de revêtir le sol des coffres automobiles avec un tapis formé par exemple d'une moquette ou d'une couche de matériau synthétique, ceci afin de protéger la tôle formant le sol et de conférer au coffre, quand il est visible de l'utilisateur, un aspect avantageux.

Un tel tapis, s'il satisfait aux exigences de protection et d'esthétique attendues, présente en revanche des inconvénients dans un certain nombre de situations.

Le chargement de certains objets peut introduire en effet des salissures sous forme solide ou liquide. Les salissures solides peuvent résulter par exemple du dépôt de terre ou de graviers. De même, des liquides tels que l'eau ou l'huile peuvent être répandus sur le revêtement de sol.

Il est alors nécessaire de procéder à un nettoyage du tapis pour lui redonner son aspect d'origine.

Pour faciliter ce nettoyage, il a été proposé de réaliser des tapis aisément amovibles. Dans le cas de tapis formés par exemple d'une moquette, ce nettoyage peut s'avérer délicat.

C'est pourquoi une solution communément employée consiste à revêtir le tapis d'un élément de protection amovible, tel qu'une bâche revêtue d'une couche de matière plastique facilement nettoyable.

Cette solution présente divers inconvénients. Du fait de sa structure souple, une bâche doit être soigneusement disposée sur le sol afin de le recouvrir complètement.

Par ailleurs, il est souvent utile d'assurer une fixation périphérique afin d'empêcher son glissement en cours d'utilisation et, le cas échéant, de former un rebord périphérique saillant permettant de contenir les salissures sur la surface de la bâche.

En outre, le rangement de la bâche, lorsqu'elle n'est pas utilisée, nécessite un démontage et un pliage fastidieux.

Le but de la présente invention est de proposer un élément de protection de sol d'un coffre de véhicule automobile simple a réaliser, dont la mise en configuration d'utilisation et le rangement sont aisés, et assurant une bonne protection du sol vis à vis des salissures, notamment en périphérie de l'élément.

A cet effet et selon un premier aspect, l'invention propose un élément pliable de protection du sol d'un coffre de véhicule automobile comprenant une feuille de matériau souple, de forme correspondante au sol à revêtir, et un arceau périphérique flexible associé à ladite feuille, ledit arceau étant apte à conformer ladite feuille de façon réversible dans une position tendue d'utilisation de l'élément et dans une position pliée de rangement de l'élément.

Un tel élément est léger et peu encombrant lorsqu'il n'est pas utilisé, ce qui le rend facile à utiliser. En effet, l'élément de protection du sol peut être mis en place et retiré du coffre en très peu de temps et sans effort particulier d'agencement ou de fixation.

D'autres particularités et avantages de l'invention apparaîtront dans la description qui suit, faite en référence aux figures jointes dans lesquelles :
- la figure 1 est une vue schématique en perspective d'un élément de protection selon l'invention ;
- la figure 2 est une représentation schématique de la fixation par un ourlet de l'arceau flexible à la feuille de matériau souple.

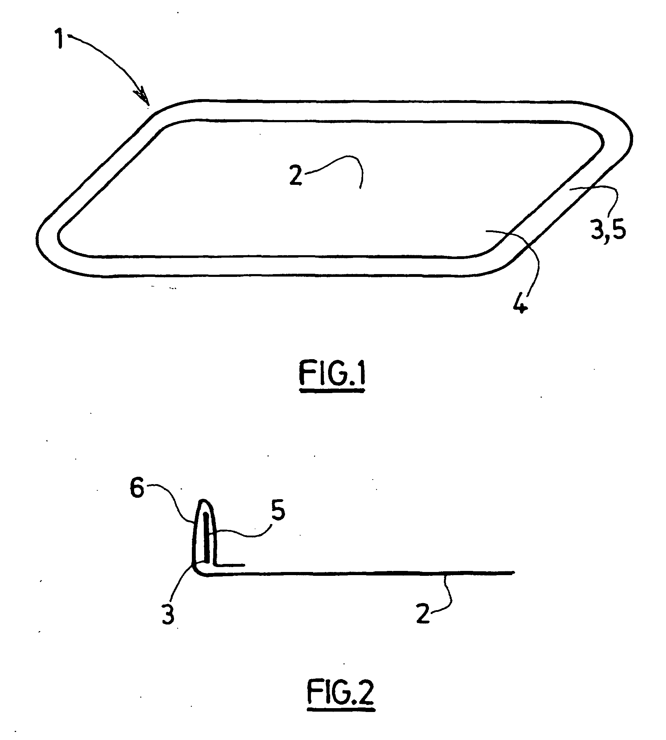

En référence à la figure 1, l'élément de protection 1 selon l'invention comprend une feuille de matériau souple 2, telle qu'une bâche, et un arceau périphérique 3 flexible solidaire de la périphérie 4 de ladite feuille.

La feuille 2 est réalisée à base d'un matériau aisément nettoyable, par exemple en matière plastique, et de résistance appropriée à ses conditions d'utilisation, notamment du point de vue de l'étanchéité afin de protéger le fond du coffre.

En outre, sa forme correspond à celle du sol à revêtir.

L'arceau 3 disposé en périphérie de la feuille 2 est par exemple formé à base d'un métal à ressort, permettant d'assurer une tension de ladite feuille en configuration d'utilisation. Du fait de sa flexibilité, l'arceau 3 peut être disposé en configuration compacte par torsion relative de deux de ses points opposés et pliage, ceci afin de permettre le rangement de l'élément 1, par exemple dans un sac prévu à cet effet.

Un tel arceau 3 permet le pliage et le dépliage aisé de l'élément de protection 1 entre une position tendue d'utilisation de l'élément 1 et une position pliée de rangement de l'élément 1.

Lorsque l'élément 1 est dans sa position pliée, il suffit de le lâcher pour qu'il se déploie dans sa position tendue. Sa mise en place dans le coffre est donc facilitée car l'élément 1, du fait de sa flexibilité, s'adapte seul à l'espace qu'il doit occuper.

En particulier, lors de la mise en place de l'élément 1 dans sa position tendue au fond du coffre, la forme de l'arceau 3 s'adapte de façon à ce que celui-ci vienne en appui contre les bords latéraux du coffre, la feuille 2 recouvrant le fond du coffre. Ainsi le fond du coffre est complètement protégé tant vers sa partie centrale que vers sa partie périphérique. Ceci permet en outre d'assurer un maintien périphérique de l'élément de protection 1 dans le coffre. De plus, on assure une bonne étanchéité en périphérie, ce qui améliore la fonction de protection de l'élément 1.

De plus, le maintien périphérique conféré par l'arceau 3 évite de prévoir des moyens de fixation de l'élément 1 au fond du coffre, celui-ci étant maintenu en place par l'arceau.

En variante, l'arceau 3 peut être réalisé à base de matière plastique.

Dans un mode de réalisation, schématisé en figure 2, l'arceau 3 et formé d'une lame 5 refermée sur elle même en ses extrémités respectives, ladite lame permettant de conférer à l'élément 1 un rebord saillant 6.

Un tel rebord 6 confère à l'élément de protection 1 une forme de « cuvette » qui peut retenir les salissures, telles que des liquides ou de la poussière. Ainsi, lorsqu'on souhaite nettoyer le coffre, il suffit d'extraire l'élément 1 déplié hors du coffre et de le nettoyer. En effet, celui-ci retient les salissures entre ses bords saillants et le fond du coffre est protégé.

De plus, du fait du maintien périphérique de l'élément contre les bords latéraux du coffre, toute la surface du fond du coffre est protégée et les coins du coffre, où vient habituellement se loger la poussière, sont recouverts par l'élément de protection 1, empêchant ainsi une accumulation de salissures dans ces zones.

Le rebord 6 peut être rendu solidaire de la feuille 2 par insertion dans un ourlet prévu en périphérie de ladite feuille.

En variante, le rebord 6 peut être fixé par soudage ou collage à la feuille 2. Ceci évite d'avoir à coudre un ourlet en périphérie, ce qui entraîne une économie de textile et rend l'élément de protection 1 plus léger.

On peut envisager de rendre la feuille 2 transparente à la lumière, en la réalisant par exemple à partir d'un matériau polymérique transparent. Ainsi, dans le cas où un motif est réalisé au fond du coffre, celui-ci peut être visible par l'utilisateur, d'où un meilleur aspect visuel du coffre.

## Revendications

1. Elément pliable de protection du sol d'un coffre de véhicule automobile, comprenant une feuille de matériau souple (2), de forme correspondante au sol à revêtir, **caractérisé par** un arceau périphérique (3) flexible associé à ladite feuille, ledit arceau étant apte à conformer ladite feuille de façon réversible dans une position tendue d'utilisation de l'élément (1) et dans une position pliée de rangement de l'élément (1).

2. Elément selon le revendication 1, **caractérisé en ce que** l'arceau (3) est agencé pour conférer audit élément un rebord périphérique saillant (6).

3. Elément selon la revendication 2, **caractérisé en ce que** l'arceau (3) est formé d'une lame ressort (5).

4. Elément selon l'une quelconque des revendications précédentes, **caractérisé en ce que** l'arceau (3) est inséré dans un ourlet prévu en périphérie de la feuille (2).

5. Elément selon l'une quelconque des revendications 1 à 3, **caractérisé en ce que** l'ardeau (3) est fixé en périphérie de la feuille (2), par exemple par soudage ou collage.

6. Elément selon l'une quelconque des revendications précédentes, **caractérisé en ce que** la feuille (2) est sensiblement étanche aux liquides tels que l'eau ou l'huile.

7. Elément selon l'une quelconque des revendications précédentes, **caractérisé en ce que** la feuille (2) est réalisée à base d'un matériau polymérique transparent.

## Patentansprüche

1. Faltbares Schutzelement des Bodens eines Kfz-Kofferraums mit einem Blatt aus elastischem Material (2) in der dem auszukleidenden Boden entsprechenden Form, **gekennzeichnet durch** einen dem genannten Blatt zugeordneten flexiblen peripherischen kleinen Bogen (3), wobei der genannte kleine Bogen geeignet ist, das genannte Blatt auf reversible Weise in einer gespannten Nutzungsposition des Elements (1) und in einer gefalteten Verstauungsposition des Elements (1) anzupassen.

2. Element gemäß Anspruch 1, **dadurch gekennzeichnet, dass** der kleine Bogen (3) angeordnet ist, um dem genannten Element einen peripherischen hervorspringenden Rand (6) zu verleihen.

3. Element gemäß Anspruch 2, **dadurch gekennzeichnet, dass** der kleine Bogen (3) aus einer Federklinge (5) gebildet wird.

4. Element gemäß einem der vorherigen Ansprüche, **dadurch gekennzeichnet, dass** der kleine Bogen (3) in einen an der Peripherie des Blattes (2) vorgesehenen Saum eingefügt wird.

5. Element gemäß Anspruch 1 bis 3, **dadurch gekennzeichnet, dass** der kleine Bogen (3) an der Peripherie des Blattes (2) zum Beispiel durch Verschweißen oder Verkleben befestigt ist.

6. Element gemäß einem der vorherigen Ansprüche, **dadurch gekennzeichnet, dass** das Blatt (2) gegen Flüssigkeit, wie Wasser oder Öl, deutlich abgedichtet ist.

7. Element gemäß einem der vorherigen Ansprüche, **dadurch gekennzeichnet, dass** das Blatt (2) auf der Basis eines polymerischen transparenten Materials realisiert ist.

## Claims

1. A pliable element for protecting the floor of the boot of a motor vehicle comprising a sheet of flexible material (2) in a shape that matches the shape of the floor to be covered, **characterised by** a peripheral flexible arch (3) associated with the said sheet, the said arch being able to place the said sheet reversibly in an extended position in which the element (1) is in use and in a folded position in which the element is stored (1).

2. An element according to claim 1, **characterised in that** the arch (3) is disposed so as to provide the said element with a salient peripheral edge (6).

3. An element according to claim 2, **characterised in that** the arch (3) is made up of a spring clip (5).

4. An element according to any one of the preceding claims, **characterised in that** the arch (3) is inserted in a hem disposed in the periphery of the sheet (2).

5. An element according to any one of the claims from 1 to 3, **characterised in that** the arch (3) is fixed in the periphery of the sheet (2), for example by cementing or gluing.

6. An element according to any one of the preceding claims, **characterised in that** the sheet (2) is essentially hermetic to liquids such as water or oil.

7. An element according to any one of the preceding claims, **characterised in that** the sheet (2) is made from a transparent polymeric material.
